# EUROPEAN PATENT APPLICATION

(11) **EP 2 887 673 A1**
(43) Date of publication of application: **24.06.2015**
(21) Application number: 13306747.0
(22) Date of filing: 17.12.2013
(51) Int. Cl.: H04N 19/70, H04N 19/12, H04N 19/174, H04N 19/30, H04N 19/176, H04N 19/46, H04N 1/60

(54) **Method for coding a sequence of pictures and method for decoding a bitstream and corresponding devices**

(71) Applicant: Thomson Licensing, 92130 Issy-les-Moulineaux (FR)
(72) Inventor: Lopez, Patrick, 35576 Cesson-Sévigné (FR); Bordes, Philippe, 35576 Cesson-Sévigné (FR); Andrivon, Pierre, 35576 Cesson-Sévigné (FR)
(74) Representative: Huchet, Anne

(57) **Abstract**

A method for encoding a sequence of pictures into a scalable bitstream comprising a first layer and a second layer is disclosed. The method comprises:
- encoding (10) a first version of the sequence of pictures into the first layer;
- reconstructing (12) at least one region of a picture of the first version of the sequence of pictures;
- processing (14) the at least one reconstructed region;
- encoding (16) a second version of the sequence of pictures from the at least one processed region into the second layer,
wherein processing (14) the at least one reconstructed region comprises applying at least two interlayer processing operations according to a default order or according to a modified order and wherein the method further comprises encoding (18) in the scalable bitstream a first information indicating whether the at least two interlayer processing operations are to be applied according to a default order and a second information indicating how to modify the default order into the modified order when the first information indicates that the at least two interlayer processing operations are not to be applied according to the default order.

## Description

### 1. FIELD OF THE INVENTION

A method for encoding a sequence of pictures into a scalable bitstream comprising a first layer and a second layer is disclosed. Corresponding decoding method, encoding device and decoding device are further disclosed.

### 2. BACKGROUND OF THE INVENTION

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

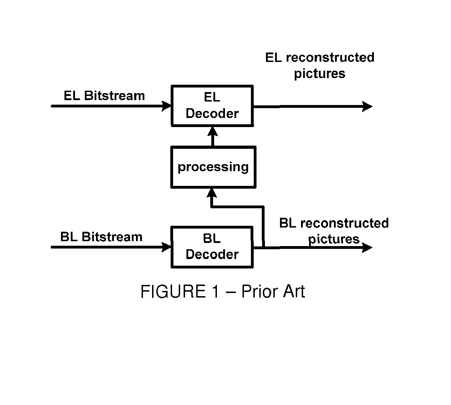

Scalable codecs are known to implement interlayer processing operations in order to reduce redundancies between layers. **Figure 1** depicts a scalable decoder adapted to decode a scalable bitstream comprising a base layer BL and one additional layer EL (also known as enhancement layer). Base layer pictures (BL pictures) are reconstructed from the base layer. The reconstructed base layer pictures are further processed. The processed pictures are then used to derive predictors for picture's region of the additional layer. As an example, the processing of the reconstructed base layer pictures comprises applying a color transform when BL pictures and EL pictures are represented using different color gamuts. The processing may also comprise upsampling the reconstructed BL pictures if their resolution is different from the resolution of the EL pictures. The processing may further comprise increasing the bit depth of the reconstructed BL pictures when the bitdepth of the BL pictures is lower than the bitdepth of the EL pictures. More generally, two layers of a scalable bitstream differ by several characteristics (e.g. bit depth, color gamut, resolution, frame rate) and interlayer processing operations comprise modifying the characteristics of a first layer so that the modified characteristics are closer to the corresponding characteristics of a second layer. Usually the order of the operations is fixed and known by both the encoder and the decoder. This ensures that the encoder and the decoder apply the operations in the same order and thus avoid any drift during prediction. Depending on the content of the pictures, this fixed order may be inappropriate to efficiently encode a sequence of pictures.

### 3. BRIEF SUMMARY OF THE INVENTION

The purpose of the invention is to overcome at least one of the disadvantages of the prior art.

To this aim, a method for encoding a sequence of pictures into a scalable bitstream comprising a first layer and a second layer is disclosed. The method comprises:
- encoding a first version of the sequence of pictures into the first layer;
- reconstructing at least one region of a picture of the first version of the sequence of pictures;
- processing the at least one reconstructed region;
- encoding a second version of the sequence of pictures from the at least one processed region into the second layer,
wherein processing the at least one reconstructed region comprises applying at least two interlayer processing operations according to a default order or according to a modified order and wherein the method further comprises encoding in the scalable bitstream a first information indicating whether the at least two interlayer processing operations are to be applied according to a default order and a second information indicating how to modify the default order into the modified order when the first information indicates that the at least two interlayer processing operations are not to be applied according to the default order.

A method for decoding a scalable bitstream comprising a first layer and a second layer representative of a sequence of pictures is also disclosed that comprises:
- reconstructing at least one region of a picture of the first version of the sequence of pictures from the first layer;
- processing the at least one reconstructed region;
- reconstructing a second version of the sequence of pictures from the second layer and from the at least one processed region;
wherein the method further comprises decoding from the scalable bitstream a first information indicating whether the at least two interlayer processing operations are to be applied according to a default order and a second information indicating how to modify the default order into a modified order when the information indicates that the at least two interlayer processing operations are not to be applied according to the default order and wherein processing the at least one reconstructed region comprises applying at least two interlayer processing operations according to the decoded default order or according to the modified order.

A device for encoding a sequence of pictures into a scalable bitstream comprising a first layer and a second layer is disclosed. The coding device comprises:
- means for encoding a first version of the sequence of pictures into the first layer;
- means for reconstructing at least one region of a picture of the first version of the sequence of pictures;
- means for processing the at least one reconstructed region;
- means for encoding a second version of the sequence of pictures from the at least one processed region into the second layer,
wherein, the means for processing being configured to apply at least two interlayer processing operations according to a default order or according to a modified order, the device further comprises means for encoding in the scalable bitstream a first information indicating whether the at least two interlayer processing operations are to be applied according to a default order and a second information indicating how to modify the default order into the modified order when the first information indicates that the at least two interlayer processing operations are not to be applied according to the default order.

A device for decoding a scalable bitstream comprising a first layer and a second layer representative of a sequence of pictures is disclosed. The decoding device comprises:
- means for reconstructing at least one region of a picture of the first version of the sequence of pictures from the first layer;
- means for processing the at least one reconstructed region;
- means for reconstructing a second version of the sequence of pictures from the second layer and from the at least one processed region;
wherein the device further comprises means for decoding from the scalable bitstream a first information indicating whether the at least two interlayer processing operations are to be applied according to a default order and a second information indicating how to modify the default order into a modified order when the information indicates that the at least two interlayer processing operations are not to be applied according to the default order and wherein the means for processing are configured to apply at least two interlayer processing operations according to the decoded default order or according to the modified order.

A computer program product comprising program code instructions to execute the steps of the encoding method according to any of its embodiments when this program is executed on a computer.

A computer program product comprising program code instructions to execute the steps of the decoding method according to any of its embodiments when this program is executed on a computer.

A processor readable medium having stored therein instructions for causing a processor to perform at least the steps of the encoding method according to any of its embodiments.

A processor readable medium having stored therein instructions for causing a processor to perform at least the steps of the decoding method according to any of its embodiments.

A scalable bitstream representative of a sequence of pictures Is disclosed. The scalable bitstream comprises, in a first layer, data coding a first version of the sequence of pictures, comprises, in a second layer, data coding a second version of the sequence of pictures from at least one reconstructed region of a picture of the first version of the sequence of pictures processed by applying at least two interlayer processing operations according to a default order or according to a modified order. The scalable bitstream further comprises data coding a first information indicating whether the at least two interlayer processing operations are to be applied according to a default order and data coding a second information indicating how to modify the default order into the modified order when the first information indicates that the at least two interlayer processing operations are not to be applied according to the default order.

### 4. BRIEF DESCRIPTION OF THE DRAWINGS

Other features and advantages of the invention will appear with the following description of some of its embodiments, this description being made in connection with the drawings in which:
- Figure 1 depicts a scalable decoder according to the prior art adapted to decode a scalable bitstream comprising a base layer BL and one additional layer EL;
- Figure 2 depicts a method for encoding a sequence of pictures into a scalable bitstream comprising a first layer and a second layer according to a specific and non-limitative embodiment of the invention;
- Figure 3 depicts a method for decoding a scalable bitstream comprising a first layer and a second layer representative of a sequence of pictures according to a specific and non-limitative embodiment of the invention;
- Figure 4 represents an exemplary architecture of an encoder configured to encode a sequence of picture in accordance with an exemplary embodiment of the invention; and
- Figure 5 represents an exemplary architecture of a decoder configured to decode a scalable bitstream in accordance with an exemplary embodiment of the invention.

### 5. DETAILED DESCRIPTION OF THE INVENTION

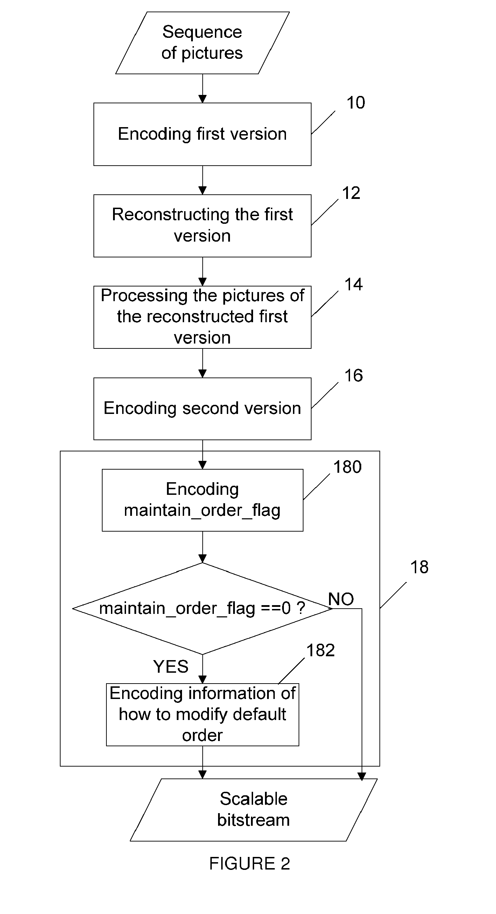

**Figure 2** depicts a method for encoding a sequence of pictures into a scalable bitstream comprising a first layer, e.g. a base layer, and a second layer according to a specific and non-limitative embodiment of the invention. Layers are identified by layer_id. The layer_id of the base layer is usually equal to 0. The method may be used to encode two layers, the first layer i playing the role of the base layer towards the second layer i+1, i being an integer identifying the layers. The sequence of pictures may be obtained from a source. According to different embodiments of the invention, the source belongs to a set comprising:
- a local memory, e.g. a video memory or a RAM, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an image capturing circuit (such as a CCD).

According to different embodiments of the invention, the bitstream may be sent to a destination. As an example, the bitstream is stored in a local memory , e.g. a video memory or a RAM, a hard disk. In a variant, the bitstream is sent to a storage interface, e.g. an interface with a mass storage, a ROM, an optical disc or a magnetic support and/or transmitted over a communication interface, e.g. an interface to a point to point link or a point to multipoint link or a broadcast network.

In a step 10, a first version of the sequence of pictures is encoded in a first layer identified by a layer_id equal to i-1, where i is an integer and i>1. Encoding the first version of the sequence of pictures usually but not necessarily comprises, for one current region of a picture, determining a predictor from already encoded and reconstructed regions belonging either to the same picture as the current region (intra prediction) or from a different picture (inter prediction). A block, a macroblock, a slice, a CTU (English acronym for Coding Tree Unit) are examples of such regions. CTU is defined in section 3.31 of the document HEVC standard also known as H.265. The regions used for the prediction are for example identified using motion vectors. Information (e.g. motion vector, coding modes, etc) are also encoded in the first layer to make it possible to recover the predictor on the decoder side. The predictor is subtracted from the current region to form residuals. The residuals are then transformed into coefficients, e.g. by applying a DCT-like transform (DCT stands for "Discrete Cosine Transform") or wavelet transforms, etc. The coefficients are then quantized into quantized coefficients which are in turn entropy coded into the first layer. The steps are repeated on all the regions of a picture and on all the pictures to encode the whole sequence. The invention is not at all limited by the way the pictures are encoded.

In a step 12, the first version of the sequence of pictures is reconstructed. Specifically, each region of the first layer pictures is reconstructed. According to a variant, only some regions are reconstructed, e.g. the ones used for interlayer prediction. Reconstructing a region comprises inverse quantizing the quantized coefficients to obtain reconstructed coefficients which are in turn inverse transformed into reconstructed residuals. Finally, the predictor of that region is added to the reconstructed residuals to obtain a reconstructed region.

In a step 14, the regions reconstructed at step 12 are processed by applying at least two interlayer processing operations according to a specific order. As an example, inter-layer processing operations comprises spatial upsampling, bit depth increase (e.g. by left shifting of pixels' values), color gamut extension, etc. This order may be a default order or different from the default order. As an example, all orders of prediction are tested on the encoder side and the one that produces the most accurate predictor is selected. The predictor may be determined according to an order to be tested for the whole sequence, independently for each picture or for each picture region. A predictor better matches an EL sequence/picture/region if for example the SAD (Sum of Absolute Differences) between the predictor and the EL sequence/picture/region is the smallest one. According to a variant, the choice of the order is achieved externally to the encoding method, e.g. according to the type of scalability. The order may be spatial upsampling first and then bit depth increase if only these two interlayer processing operations are to be applied and modified into bit depth increase first and then spatial scalability when color gamut extension is also present. The invention is not limited by the type of processing operations applied, nor by the way the appropriate order is determined.

In a step 16, a second version of the sequence of pictures is encoded into the second layer from processed pictures. The second layer is identified by a layer_id equal to i. Specifically, a predictor is subtracted from an EL region to get residuals which are transformed into coefficients. The coefficients are then quantized and entropy coded in the second layer. The predictor for an EL region is either a classical intra or inter predictor derived from already encoded and reconstructed EL regions. According to a variant the predictor is an inter-layer predictor derived from processed BL regions, e.g. from the spatially co-located processed BL region. According to a variant, a non co-located processed BL region is used in the interlayer prediction that is identified by a motion vector. Exemplarily, in an encoder this choice is made by an encoding mode selection unit, e.g. based on rate-distortion optimization (RDO). Information (e.g. motion vector, coding modes, etc) are also encoded in the second layer to make it possible to recover the predictor on the decoder side.

In a step 18, an information indicating whether the at least two interlayer processing operations are to be applied according to the default order is encoded in the scalable bitstream. When the information indicates that the at least two interlayer processing operations are not to be applied according to the default order, a second information indicating how to modify the default order is further encoded in the scalable bitstream. Advantageously, in a step 180, the information indicating whether the at least two interlayer processing operations are to be applied according to the default order is encoded in the form of a syntax element maintain_order_flag. Exemplarily, maintain_order_flag is set equal to 1 to indicate that the default order is used in step 14. maintain_order_flag is set equal to 0 to indicate that the default order is not used in step 14. In the latter case, an additional information is encoded, in a step 182, in the form of syntax elements describing how to modify the default order to obtain the order used in step 14. Advantageously, the new syntax elements are encoded in a video parameter set (VPS) and more precisely in the VPS extension defined in section F 7.3.2.1.1 of the SHVC standard (document JCTVC-N1008 published during 14^{th} Meeting in Vienna, 25 July-2 August 2013). In the table below only parts of the VPS extension are indicated. The amendments to the vps extension are indicated in italics. vps_extension first specifies the number NumScalabilityTypes of scalability types present in the scalable bitstream, i.e. among all layers of the scalable bitstream. For instance, NumScalabilityTypes = 3 in the case of spatial, bit depth and color gamut scalability. A syntax element **scalability_mask_flag [**k] is also used to indicate if the scalability type k is used in the scalable bitstream. The scalability types are defined in table F-1 of the SHVC standard. An interlayer processing operation corresponds to each scalability type. As an example, spatial scalability type corresponds to spatial upsampling.

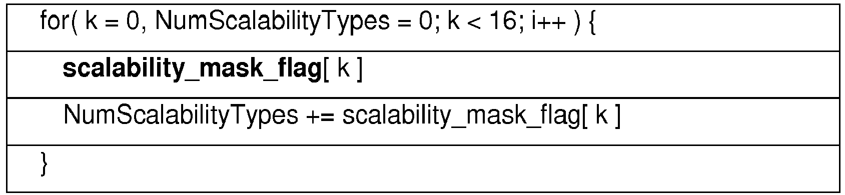

**scalability_mask_flag**[k] equal to 1 indicates that dimension_id syntax elements corresponding to the k-th scalability dimension in Table F-1 are present. scalability_mask_flag[k] equal to 0 indicates that dimension_id syntax elements corresponding to the k-th scalability dimension are not present.
For a layer i, a syntax element dimension[i][j] is used to specify if the scalability type j is present between layer i and layer i-1. Indeed, the scalability type j may be present in the scalable bitstream between two layers but not necessarily between layer i and layer i-1. In this case, **scalability_mask_flag[**j] = 1 but dimension[i][j]=0.
Advantageously, the VPS extension is thus modified as follows to specify the order of the interlayer processing operations, i.e. the order in which the scalability types are applied for the layer i.

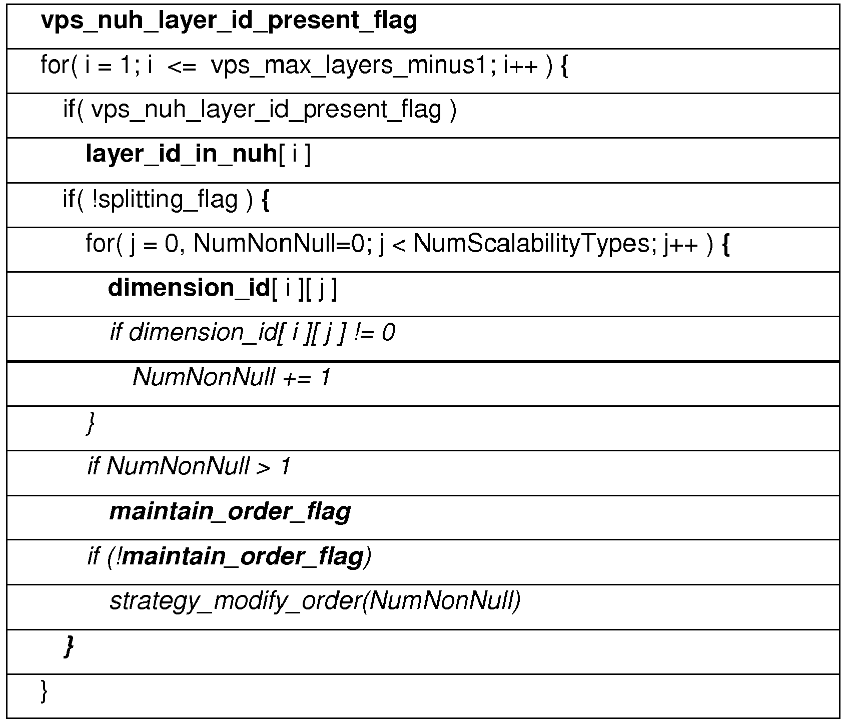

**vps_nuh_layer_id_present_flag** equal to 1 specifies that layer_id_in_nuh[i] for i from 0 to vps_max_layers_minus1, inclusive, are present. vps_nuh_layer_id_present_flag equal to 0 specifies that layer_id_in_nuh[i] for i from 0 to vps_max_layers_minus1, inclusive, are not present.
**layer_id_in_nuh**[i] specifies the value of the nuh_layer_id syntax element in VCL NAL units of the i-th layer. For i in the range of 0 to vps_max_layers_minus1, inclusive, when layer_id_in_nuh[i] is not present, the value is inferred to be equal to i.
When i is greater than 0, layer_id_in_nuh[i] shall be greater than layer_id_in_nuh[i-1].
For i from 0 to vps_max_layers_minus1, inclusive, the variable LayerIdxInVps[ layer_id_in_nuh[i] ] is set equal to i.
**dimension_id**[i][j] specifies the identifier of the j-th present scalability dimension type of the i-th layer, i.e. of the layer whose layer_id equals to i. The number of bits used for the representation of **dimension_id[**i][j] is dimension_id_len_minus1 [j] + 1 bits.
For a layer i, when the number NumNonNull of non-null values of dimension[i][j] is strictly more than 1, this means that at least 2 characteristics (e.g. bit depth and spatial resolution) are modified between layer i-1 and layer i. Said otherwise two interlayer processing operations needs to be applied between both layers for prediction. Advantageously, a flag ***maintain_order_flag*** is thus encoded in the bitstream to indicate whether the default order must be used in the decoding process because it was used in step 14. The default order is for example defined by increasing order of the scalability mask indices of table F-1.
Exemplarily, ***maintain_order_flag*** equal 1 indicates that the default order is used. ***maintain_order_flag*** equal 0 indicates that the default order must be modified. The meaning of the values 0 and 1 may be switched. In the latter case, other syntax elements are encoded in strategy_modify_order(NumNonNull) to indicates how to modify the default order.

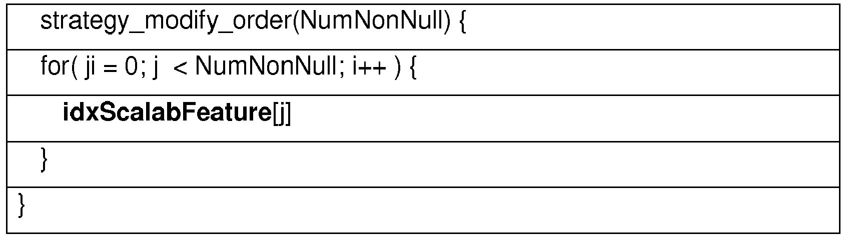

Advantageously, idxScalabFeature is a list of index which makes it possible to recover in which order the interlayer prediction operations used for this layer must be processed by the decoder.
According to a first embodiment, for a given layer, 3 scalability types are used (derived from dimension_id[i][j]), with indices 0, 4 and 5 (i.e. scalablity mask indices of Table F-1). If the decoder must process the scalability types in order #0, #5 then #4, the values of idxScalabFeature are {0, 2, 1}. They indicate that the last two scalability types have to be switched, i.e. the corresponding interlayer processing operations have to be switched. If scalability type index 0 corresponds to BDS (bitdepth scalability), scalability type index 4 to spatial scalability and scalability type index 5 to CGS (color gamut scalability), then when decoding {0, 2, 1} for idxScalabFeature , the decoder knows to apply bitdepth increase first followed by color gamut extension and spatial upsampling in the end.
According to a variant, idxScalabFeature is a list which contains in its elements the scalability types which are successively processed by the decoder. For instance, for a given layer, 3 scalability types are used (derived from dimension_id[i][j]), with indices 0, 4 and 5. If the decoder must process the scalability types in order #0, #5 then #4, the values of idxScalabFeature are {0, 5, 4}. They indicates explicitly the scalability type indices.
The syntax elements ***maintain_order_flag*** and **idxScalabFeature[]** when encoded in the VPS apply to all pictures of the sequence for the layer i.
The steps 10 to 18 of the encoding method may be applied in another order. As an example, step 18 may be applied before step 16. According to a first variant, the syntax elements ***maintain_order_flag*** and **idxScalabFeature[j]** are encoded in a Sequence Parameter Set and apply to all pictures of the sequence. The SPS extension defined in section F.7.3.2.2.1 of the SHVC standard is modified as follows:

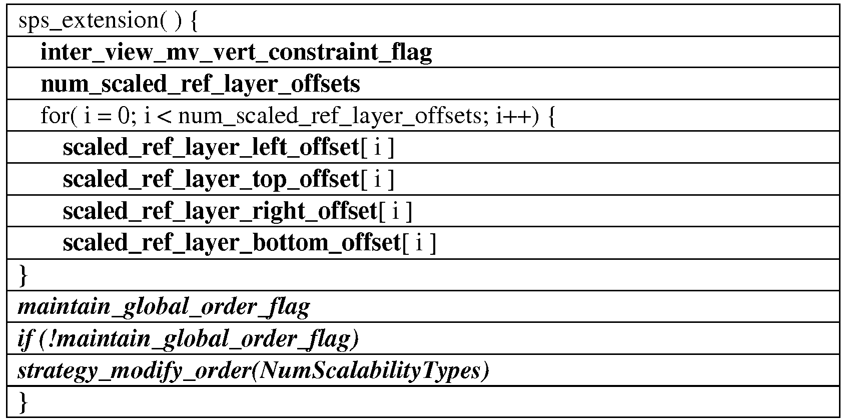

Advantageously, the encoding method makes it possible to modify the order of interlayer processing operations at the cost of a small increase in bit rate.

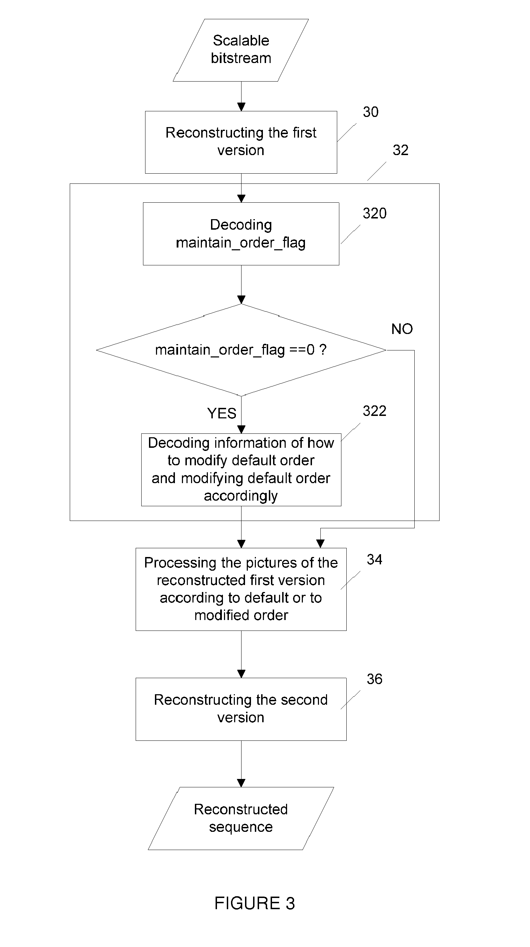

**Figure 3** depicts a method for decoding a scalable bitstream representative of a sequence of pictures according to a specific and non-limitative embodiment of the invention, wherein the scalable bitstream comprises a first layer and a second layer. The method may be used to decode two layers, the first layer i playing the role of the base layer towards the second layer i+1, i being an integer identifying the layers.
According to different embodiments of the invention, the bitstream may be obtained from a source. Exemplarily, the bitstream is read from a local memory , e.g. a video memory or a RAM, a hard disk. In a variant, the bitstream is received from a storage interface, e.g. an interface with a mass storage, a ROM, an optical disc or a magnetic support and/or received from a communication interface, e.g. an interface to a point to point link or a point to multipoint link or a broadcast network.
The decoded sequence of pictures may be sent to a destination. According to different embodiments of the invention, the destination belongs to a set comprising:
- a local memory, e.g. a video memory or a RAM, a hard disk ;
- a storage interface, e.g. an interface with a mass storage, a ROM, an optical disc or a magnetic support;
- a communication interface, e.g. a wireline interface (for example a bus interface, a wide area network interface, a local area network interface, a HDMI interface) or a wireless interface (such as a IEEE 802.11 interface or a Bluetooth interface); and
- a screen.

In a step 30, a first version of the sequence of pictures is reconstructed from the first layer. Specifically, each region of the first layer pictures is reconstructed. According to a variant, only some regions are reconstructed, e.g. the ones used for interlayer prediction. Reconstructing a region comprises entropy decoding of a part of the first layer into decoded coefficients. The decoded coefficients are inverse quantized to obtain reconstructed coefficients which are in turn inverse transformed into reconstructed residuals. Finally, the predictor of that region is added to the reconstructed residuals to obtain a reconstructed region. On the decoder side, the predictor is determined from already reconstructed regions using information decoded from the bitstream (e.g. coding mode, motion vectors, etc)

In a step 32, an information indicating whether at least two interlayer operations are to be applied according to the default order on pictures reconstructed at step 30 is decoded from the scalable bitstream. When the information indicates that the at least two interlayer processing operations are not to be applied according to the default order, a second information indicating how to modify the default order when the information indicates that the at least two interlayer processing operations are not to be applied according to the default order is further decoded from the scalable bitstream.

Specifically, in a step 320, the information indicating whether the at least two interlayer processing operations are to be applied according to the default order is decoded in the form of a syntax element maintain_order_flag. Exemplarily, maintain_order_flag is set equal to 1 to indicate that the default order is used during processing of pictures reconstructed in a step 34. maintain_order_flag is set equal to 0 to indicate that the default order is not used in step 34. In the latter case, another information is decoded, in a step 322, in the form of syntax elements describing how to modify the default order to obtain the order to be used in step 34.

Advantageously, the new syntax elements are decoded from a video parameter set (VPS) and more precisely in the VPS extension defined in section F 7.3.2.1.1 of the SHVC standard (document JCTVC-N0242 published during 14^{th} Meeting in Vienna, 25 July-2 August 2013). In the table below only parts of the VPS extension are indicated. The amendments to the vps extension are indicated in italics. vps_extension first specifies the number NumScalabilityTypes of scalability types present in the scalable bitstream, i.e. among all layers of the scalable bitstream. For instance, NumScalabilityTypes = 3 in the case of spatial, bit depth and color gamut scalability. A syntax element **scalability_mask_flag[**i] is also used to indicate if the scalability type i is used in the scalable bitstream. The scalability types are defined in table F-1 of the SHVC standard. An interlayer processing operation corresponds to each scalability type. As an example, spatial scalability type corresponds to spatial upsampling.

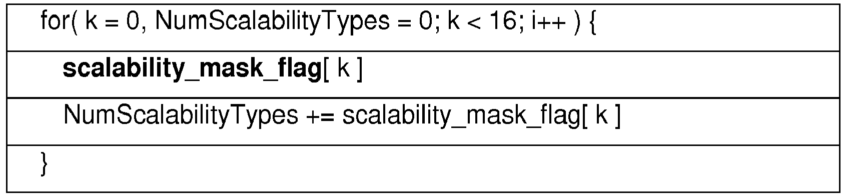

**scalability_mask_flag**[k] equal to 1 indicates that dimension_id syntax elements corresponding to the k-th scalability dimension in Table F-1 are present. scalability_mask_flag[k] equal to 0 indicates that dimension_id syntax elements corresponding to the k-th scalability dimension are not present.
For a layer i, a syntax element dimension[i][j] is used to specify if the scalability type j is present between layer i and layer i-1. Indeed, the scalability type j may be present in the scalable bitstream between two layers but not necessarily between layer i and layer i-1. In this case, **scalability_mask_flag[**j] = 1 but dimension[i][j]=0.
Advantageously, the VPS extension is thus modified as follows to specify the order of the interlayer processing operations, i.e. the order in which the scalability types are applied for the layer i.

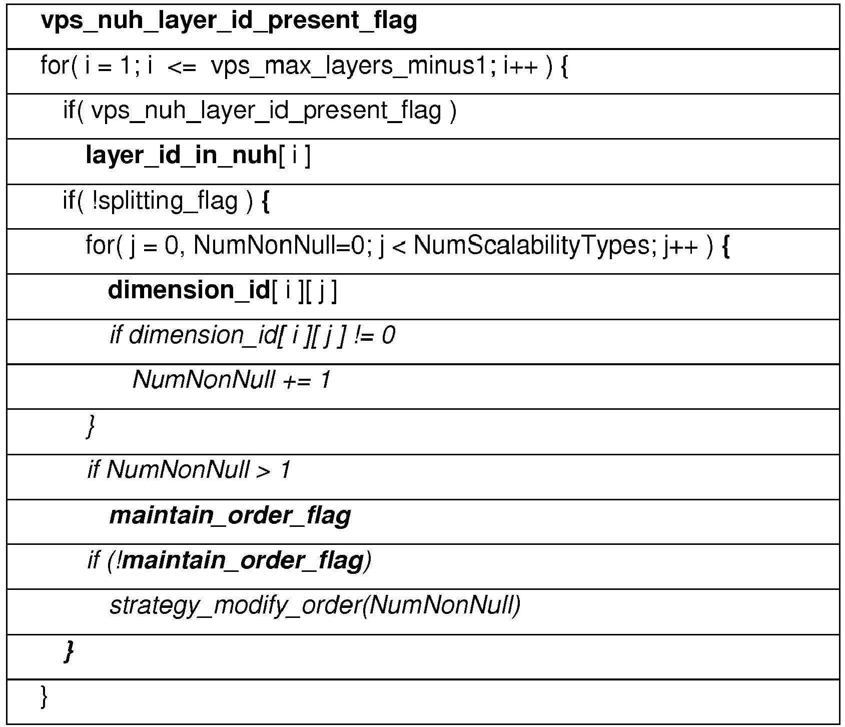

**vps_nuh_layer_id_present_flag** equal to 1 specifies that layer_id_in_nuh[i] for i from 0 to vps_max_layers_minus1, inclusive, are present. vps_nuh_layer_id_present_flag equal to 0 specifies that layer_id_in_nuh[i] for i from 0 to vps_max_layers_minus1 , inclusive, are not present.
**layer_id_in_nuh**[i] specifies the value of the nuh_layer_id syntax element in VCL NAL units of the i-th layer. For i in the range of 0 to vps_max_layers_minus1, inclusive, when layer_id_in_nuh[i] is not present, the value is inferred to be equal to i.
When i is greater than 0, layer_id_in_nuh[i] shall be greater than layer_id_in_nuh[ i - 1 ].
For i from 0 to vps_max_layers_minus1, inclusive, the variable LayerIdxInVps[ layer_id_in_nuh[i]] is set equal to i.
**dimension_id[**i][j] specifies the identifier of the j-th present scalability dimension type of the i-th layer, i.e. of the layer whose layer_id equals to i. The number of bits used for the representation of **dimension_id[**i][j] is dimension_id_len_minus1 [j] + 1 bits.
For a layer of i, when the number NumNonNull of non-null values of dimension[i][j] is strictly more than 1, this means that at least 2 characteristics (e.g. bit depth and spatial resolution) are modified between layer i-1 and layer i. Said otherwise two interlayer processing operations needs to be applied between both layers for prediction. Advantageously, a flag ***maintain_order_flag*** is thus decoded from the bitstream to indicate whether the default order must be used in the decoding process because it was used in step 14. The default order is for example defined by increasing order of the scalability mask indices of table F-1.
Exemplarily, ***maintain_order_flag*** equal 1 indicates that the default order is used. ***maintain_order_flag*** equal 0 indicates that the default order must be modified. The meaning of the values 0 and 1 may be switched. In the latter case, other syntax elements are decoded from strategy_modify_order(NumNonNull) to indicates how to modify the default order.

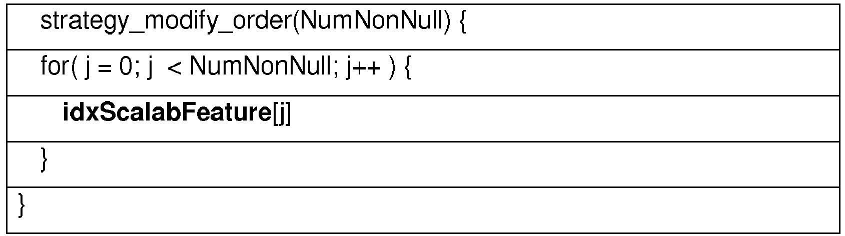

Advantageously, idxScalabFeature is a list of index which makes it possible to recover in which order the interlayer processing operations used for this layer must be processed by the decoder.
According to a first embodiment, for a given layer, 3 scalability types are used (derived from dimension_id[i][j]), with indices 0, 4 and 5 (i.e. scalablity mask indices of Table F-1). If the decoder must process the scalability types in order #0, #5 then #4, the values of idxScalabFeature are {0, 2, 1}. They indicate that the last two scalability types have to be switched, i.e. the corresponding interlayer processing operations have to be switched. If scalability type index 0 corresponds to BDS (bitdepth scalability), scalability type index 4 to spatial scalability and scalability type index 5 to CGS (color gamut scalability), then when decoding {0, 2, 1} for idxScalabFeature , the decoder knows to apply bitdepth increase first followed by color gamut extension and spatial upsampling in the end.
According to a variant, idxScalabFeature is a list which contains in its elements the scalability types which are successively processed by the decoder. For instance, for a given layer, 3 scalability types are used (derived from dimension_id[i][j]), with indices 0, 4 and 5. If the decoder must process the scalability types in order #0, #5 then #4, the values of idxScalabFeature are {0, 5, 4}. They indicates explicitly the scalability type indices.
The syntax elements ***maintain_order_flag*** and **idxScalabFeature[j]** when decoded from the VPS apply to all pictures of the sequence for the layer i.
According to a first variant, the syntax elements ***maintain_order_flag*** and **idxScalabFeature[j]** are decoded from a Sequence Parameter Set and apply to all pictures of the sequence. The same syntax disclosed with respect to the encoding method applies.

In a step 34, the regions reconstructed in the step 30 are processed by applying at least two interlayer processing operations according to the order determined in step 32, i.e. either the default order or the modified order. As an example, processing comprises spatial upsampling, bit depth increase (e.g. by left shifting of pixels' values), color transform, etc. The invention is not limited by the type of processing applied.

In a step 36, a second version of the sequence of pictures is reconstructed from the second layer and from the processed pictures. Reconstructing an EL region comprises entropy decoding of a part of the second layer into decoded coefficients. The decoded coefficients are inverse quantized to obtain reconstructed coefficients which are in turn inverse transformed into reconstructed residuals. Finally, the predictor of that region is added to the reconstructed residuals to obtain a reconstructed region. The predictor for an EL region is either a classical intra or inter predictor derived from already encoded and reconstructed EL regions. According to a variant the predictor is an inter-layer predictor derived from processed BL regions, e.g. from the spatially co-located processed BL region. According to a variant, a non co-located processed BL region is used in the interlayer prediction that is identified by a motion vector. On the decoder side, the predictor is determined from already reconstructed regions either in the same layer or in lower layers using information decoded from the bitstream (e.g. coding mode, motion vectors, etc).

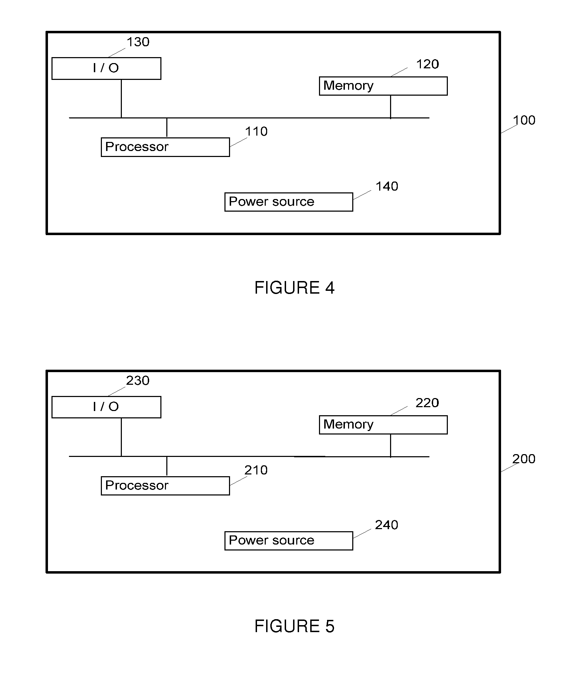

**Figure 4** represents an exemplary architecture of an encoder 100 configured to encode a sequence of pictures into a scalable bitstream comprising a first layer, e.g. a base layer, and a second layer according to an exemplary embodiment of the invention. The encoder 100 comprises one or more processor(s) 110 , which is(are), for example, a CPU, a GPU and/or a DSP (English acronym of Digital Signal Processor), along with internal memory 120 (e.g. RAM, ROM, EPROM). The encoder 100 comprises one or several Input/Output interface(s) 130 adapted to display output information and/or allow a user to enter commands and/or data (e.g. a keyboard, a mouse, a touchpad, a webcam); and a power source 140 which may be external to the encoder 100. The encoder 100 may also comprise network interface(s) (not shown). The sequence of pictures may be obtained from a source. According to different embodiments of the invention, the source belongs to a set comprising:
- a local memory, e.g. a video memory or a RAM, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an image capturing circuit (such as a CCD).
According to different embodiments of the invention, the scalable bitstream may be sent to a destination. As an example, the bitstream is stored in a local memory , e.g. a video memory or a RAM, a hard disk. In a variant, the bitstream is sent to a storage interface, e.g. an interface with a mass storage, a ROM, an optical disc or a magnetic support and/or transmitted over a communication interface, e.g. an interface to a point to point link or a point to multipoint link or a broadcast network.
According to an exemplary and non-limitative embodiment of the invention, the encoder 100 further comprises a computer program stored in the memory 120. The computer program comprises instructions which, when executed by the encoder 100, in particular by the processor 110, make the encoder 100 carry out the encoding method described with reference to figure 2. According to a variant, the computer program is stored externally to the encoder 100 on a non-transitory digital data support, e.g. on an external storage medium such as a HDD, CD-ROM, DVD, a read-only and/or DVD drive and/or a DVD Read/Write drive, all known in the art. The encoder 100 thus comprises an interface to read the computer program. Further, the encoder 100 could access one or more Universal Serial Bus (USB)-type storage devices (e.g., "memory sticks.") through corresponding USB ports (not shown).
According to exemplary and non-limitative embodiments, the encoder 100 is a device, which belongs to a set comprising:
- a mobile device:
- a camcorder;
- an encoding chip; and
- a video server.

**Figure 5** represents an exemplary architecture of a decoder 200 configured to decode a scalable bitstream representative of a sequence of pictures in accordance with an exemplary embodiment of the invention, wherein the scalable bitstream comprises a first layer and a second layer. The decoder 200 comprises one or more processor(s) 210 , which is(are), for example, a CPU, a GPU and/or a DSP (English acronym of Digital Signal Processor), along with internal memory 220 (e.g. RAM, ROM, EPROM). The decoder 200 comprises one or several Input/Output interface(s) 230 adapted to display output information and/or allow a user to enter commands and/or data (e.g. a keyboard, a mouse, a touchpad, a webcam); and a power source 240 which may be external to the decoder 200. The decoder 200 may also comprise network interface(s) (not shown).
According to different embodiments of the invention, the bitstream may be obtained from a source. Exemplarily, the bitstream is read from a local memory , e.g. a video memory or a RAM, a hard disk. In a variant, the bitstream is received from a storage interface, e.g. an interface with a mass storage, a ROM, an optical disc or a magnetic support and/or received from a communication interface, e.g. an interface to a point to point link or a point to multipoint link or a broadcast network.

The decoded sequence of pictures may be sent to a destination. According to different embodiments of the invention, the destination belongs to a set comprising:
- a local memory, e.g. a video memory or a RAM, a hard disk ;
- a storage interface, e.g. an interface with a mass storage, a ROM, an optical disc or a magnetic support;
- a communication interface, e.g. a wireline interface (for example a bus interface, a wide area network interface, a local area network interface, a HDMI interface) or a wireless interface (such as a IEEE 802.11 interface or a Bluetooth interface); and
- a screen.
According to an exemplary and non-limitative embodiment of the invention, the decoder 200 further comprises a computer program stored in the memory 220. The computer program comprises instructions which, when executed by the decoder 200, in particular by the processor 210, make the decoder 200 carry out the decoding method described with reference to figure 3. According to a variant, the computer program is stored externally to the decoder 200 on a non-transitory digital data support, e.g. on an external storage medium such as a HDD, CD-ROM, DVD, a read-only and/or DVD drive and/or a DVD Read/Write drive, all known in the art. The decoder 100 thus comprises an interface to read the computer program. Further, the decoder 200 could access one or more Universal Serial Bus (USB)-type storage devices (e.g., "memory sticks.") through corresponding USB ports (not shown).
According to exemplary and non-limitative embodiments, the decoder 200 is a device belonging to a set comprising:
- a mobile device:
- a set top box;
- a TV set;
- a tablet; and
- a decoding chip.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method for encoding a sequence of pictures into a scalable bitstream comprising a first layer and a second layer comprising:
- encoding (10) a first version of said sequence of pictures into the first layer;
- reconstructing (12) at least one region of a picture of said first version of said sequence of pictures;
- processing (14) said at least one reconstructed region;
- encoding (16) a second version of said sequence of pictures from said at least one processed region into the second layer,
wherein processing (14) said at least one reconstructed region comprises applying at least two interlayer processing operations according to a default order or according to a modified order and wherein said method further comprises encoding (18) in said scalable bitstream a first information indicating whether said at least two interlayer processing operations are to be applied according to a default order and a second information indicating how to modify said default order into said modified order when said first information indicates that said at least two interlayer processing operations are not to be applied according to said default order.

2. The method according to claim 1, wherein said sequence of pictures is obtained from a source belonging to a set comprising:
• a local memory;
• a storage interface,
• a communication interface; and
• an image capturing circuit;

3. The method according to any of claims 1 to 2, wherein said scalable bitstream is sent to a destination belonging to a set comprising:
• a local memory;
• a storage interface, and
• a communication interface;

4. A method for decoding a scalable bitstream comprising a first layer and a second layer representative of a sequence of pictures comprising:
- reconstructing (30) at least one region of a picture of the first version of said sequence of pictures from said first layer;
- processing (34) said at least one reconstructed region;
- reconstructing (36) a second version of said sequence of pictures from said second layer and from said at least one processed region;
wherein said method further comprises decoding (32) from said scalable bitstream a first information indicating whether said at least two interlayer processing operations are to be applied according to a default order and a second information indicating how to modify said default order into a modified order when said information indicates that said at least two interlayer processing operations are not to be applied according to said default order and wherein processing (34) said at least one reconstructed region comprises applying at least two interlayer processing operations according to said decoded default order or according to said modified order.

5. The method according to claim 4, wherein the scalable bitstream is obtained from a source belonging to a set comprising:
- a local memory;
- a storage interface;
- a communication interface;

6. The method according to any of claims 4 to 5, wherein the sequence of pictures is sent to a destination belonging to a set comprising:
- a local memory;
- a storage interface;
- a communication interface; and
- a screen;

7. A device for encoding a sequence of pictures into a scalable bitstream comprising a first layer and a second layer, the device comprising:
- means for encoding (110, 120, 130, 140) a first version of said sequence of pictures into the first layer;
- means for reconstructing (110, 120, 130, 140) at least one region of a picture of said first version of said sequence of pictures;
- means for processing (110, 120, 130, 140) said at least one reconstructed region;
- means for encoding (110, 120, 130, 140) a second version of said sequence of pictures from said at least one processed region into the second layer,
wherein, said means for processing being configured to apply at least two interlayer processing operations according to a default order or according to a modified order, said device further comprises means for encoding (110, 120, 130, 140) in said scalable bitstream a first information indicating whether said at least two interlayer processing operations are to be applied according to a default order and a second information indicating how to modify said default order into said modified order when said first information indicates that said at least two interlayer processing operations are not to be applied according to said default order.

8. The coding device according to claim 7, wherein said device belongs to a set comprising:
- a mobile device:
- a camcorder;
- an encoding chip; and
- a video server;

9. A device for decoding a scalable bitstream comprising a first layer and a second layer representative of a sequence of pictures, said device comprising:
- means for reconstructing (210, 220, 230, 240) at least one region of a picture of the first version of said sequence of pictures from said first layer;
- means for processing (210, 220, 230, 240) said at least one reconstructed region;
- means for reconstructing (210, 220, 230, 240) a second version of said sequence of pictures from said second layer and from said at least one processed region;
wherein said device further comprises means for decoding (210, 220, 230, 240) from said scalable bitstream a first information indicating whether said at least two interlayer processing operations are to be applied according to a default order and a second information indicating how to modify said default order into a modified order when said information indicates that said at least two interlayer processing operations are not to be applied according to said default order and wherein said means for processing are configured to apply at least two interlayer processing operations according to said decoded default order or according to said modified order.

10. The decoding device according to claim 9, wherein said device belongs to a set comprising:
- a mobile device:
- a set top box;
- a TV set;
- a tablet; and
- a decoding chip.

11. A computer program product comprising program code instructions to execute the steps of the encoding method according to claim 1 when this program is executed on a computer.

12. A computer program product comprising program code instructions to execute the steps of the decoding method according to claim 2 when this program is executed on a computer.

13. A processor readable medium having stored therein instructions for causing a processor to perform at least the steps of the encoding method according to claim 1.

14. A processor readable medium having stored therein instructions for causing a processor to perform at least the steps of the decoding method according to claim 2.

15. A scalable bitstream representative of a sequence of pictures comprising, in a first layer, data representative of a first version of said sequence of pictures, comprising, in a second layer, data representative of a second version of said sequence of pictures from at least one reconstructed region of a picture of said first version of said sequence of pictures processed by applying at least two interlayer processing operations according to a default order or according to a modified order, said scalable bitstream further comprising data representative of a first information indicating whether said at least two interlayer processing operations are to be applied according to a default order and data coding a second information representative of how to modify said default order into said modified order when said first information indicates that said at least two interlayer processing operations are not to be applied according to said default order.
